# EUROPÄISCHE PATENTSCHRIFT

(11) **EP 3 420 241 B1**
(45) Veröffentlichungstag und Bekanntmachung des Hinweises auf die Patenterteilung: **08.04.2020**
(21) Anmeldenummer: 17706772.5
(22) Anmeldetag: 23.02.2017
(51) Int. Cl.: F16D 65/092, B61H 5/00, F16D 69/04

(54) **BREMSBELAG FÜR EINE TEILBELAG-SCHEIBENBREMSE EINES SCHIENENFAHRZEUGS, ANORDNUNG EINES BREMSBELAGS AN EINEM BELAGHALTER UND VERFAHREN ZUM MONTIEREN EINES REIBELEMENTS AN EINEM BELAGTRÄGER EINES BREMSBELAGS**
BRAKE LINING FOR A PARTIALLY LINED DISC BRAKE OF A RAIL VEHICLE, ARRANGEMENT OF A BRAKE LINING ON A LINING HOLDER, AND METHOD FOR ASSEMBLING A FRICTION ELEMENT ON A LINING SUPPORT OF A BRAKE LINING
GARNITURE DE FREIN CONÇUE POUR UN FREIN À DISQUE À GARNITURE PARTIELLE D'UN VÉHICULE SUR RAILS, AGENCEMENT D'UNE GARNITURE DE FREIN SUR UN PORTE-GARNITURE ET PROCÉDÉ POUR MONTER UN ÉLÉMENT DE FRICTION SUR UN SUPPORT D'UNE GARNITURE DE FREIN

(30) Priorität: 26.02.2016 DE 102016103460
(43) Veröffentlichungstag der Anmeldung: 02.01.2019
(73) Patentinhaber: KNORR-BREMSE Systeme für Schienenfahrzeuge GmbH, 80809 München (DE)
(72) Erfinder: ELSTORPFF, Marc-Gregory, 80368 München (DE); MATHIEU, Michael, 82178 Puchheim (DE); FUDERER, Erich, 82256 Fürstenfeldbruck (DE); MOSBACH, Christian, 82239 Alling (DE); JUNG, Alexander, 82131 Gauting (DE)
(86) Internationale Anmeldenummer: PCT/EP2017/054106
(87) Internationale Veröffentlichungsnummer: WO 2017/144556

(56) Entgegenhaltungen:
- EP-A1- 2 811 195
- CN-A- 102 003 482
- DE-A1-102013 011 672
- DE-U1- 20 017 539

## Beschreibung

Die vorliegende Erfindung betrifft einen Bremsbelag für eine Teilbelag-Scheibenbremse eines Schienenfahrzeugs gemäß dem Oberbegriff des Anspruchs 1. Die Erfindung betrifft des Weiteren eine Anordnung eines solchen Bremsbelags an einem Belaghalter sowie ein Verfahren zum Montieren eines Reibelements an einem Belagträger eines solchen Bremsbelags.

Eine gattungsgemäße Teilbelag-Scheibenbremse eines Schienenfahrzeugs ist beispielsweise in der EP 0 784 761 B1 beschrieben. Die Bremsbeläge werden bei einer solchen Teilbelag-Scheibenbremse auf einen Belaghalter parallel zur Reibfläche der Bremsbeläge oder einer Bremsscheibe aufgeschoben und anschließend über einen in den Belaghalter eingreifenden, verspannbaren Bolzen des Belaghalters gesichert.

Jeder der Bremsbeläge selbst umfasst im Wesentlichen einen Belagträger sowie mehrere schwenkbar an dem Belagträger angeordnete Trägerbleche, an denen schwenkbar mehrere Reibelemente angeordnet sind. Zur schwenkbaren Anordnung sind die Reibelemente mittels einer ersten Kugelkalotte in kalottenförmigen Pfannen des jeweiligen Trägerblechs schwenkbar geführt. Das Trägerblech selbst weist ebenfalls eine Kugelkalotte auf, die in einer entsprechenden kalottenförmigen Pfanne des Belagträgers schwenkbar geführt ist.

Die Reibelemente sind dabei mittels eines Federelements am Trägerblech gesichert. In gleicher Weise ist das Trägerblech selbst separat mittels eines weiteren Federelements am Belagträger gesichert. Als Federelement wird hier eine Spiraldruckfeder eingesetzt, die sich einerseits auf einer dem Belagträger zugewandten Oberseite des Trägerblechs und zum zweiten an einer auf einem Reibelement aufgeschraubten Mutter abstützt.

In einer weiteren Ausführungsvariante der oben genannten EP-Schrift wird eine Tellerfeder eingesetzt, die sich auf der einen Seite an einer dem Belagträger zugewandten ebenen Fläche des Trägerblechs und zentral an einem Absatz des Reibelements abstützt.

Auch bekannt ist die Anbringung der Reibelemente direkt am Belagträger, beispielsweise aus der DE 197 09 962 C1, der CN 102 003 482 A oder der DE 20 2011 001 991 U1.

Nachteilig ist hier, dass bei Bruch eines Federelementes das Reibelement sich von dem Trägerblech ablösen kann.

Aufgabe der vorliegenden Erfindung ist es, einen Bremsbelag für eine Teilbelag-Scheibenbremse eines Schienenfahrzeugs bereitzustellen, bei der ein Ablösen einzelner Reibelemente bei Bruch eines Federelementes wirksam verhindert werden kann.

Weitere Aufgabe der vorliegenden Erfindung ist es, ein einfacheres Verfahren zum Montieren eines Reibelementes an einem Belagträger eines solchen Bremsbelags bereitzustellen.

Die erste Aufgabe wird durch einen Bremsbelag für eine Teilbelag-Scheibenbremse eines Schienenfahrzeugs mit den Merkmalen des Anspruchs 1 sowie durch eine Anordnung eines Bremsbelags an einem Belaghalter mit den Merkmalen des Anspruchs 11 gelöst.

Die weitere Aufgabe wird durch ein Verfahren zum Montieren eines Reibelements an einem Belagträger eines solchen Bremsbelags mit den Merkmalen der Ansprüche 12 bis 15 gelöst.

Bei dem erfindungsgemäßen Bremsbelag ist jedes der Reibelemente mittels des Federelements gegenüber dem Belagträger verspannt. Dabei ist das Federelement oder ein das Federelement stützendes Sicherungselement an einem in einer Aussparung des Belagträgers aufgenommen Kopfteil des Halteelements durch plastische Verformung des Kopfteils kraft- und formschlüssig festgelegt.

Durch die kraft- und formschlüssige Verformung des Kopfteils, mit der das Federelement oder das das Federelement stützende Sicherungselement am Halteelement festgelegt wird, ist ein Verlust des Reibelements auch bei Bruch des Federelementes verhindert, da es durch das am Halteelement verbleibende Restsegment des Federelements oder des kraft- und formschlüssig festgelegten Sicherungselements am Herausfallen aus dem Belagträger gesichert ist.

Die kraft- und formschlüssige Verformung des Kopfteils des Halteelements hat den weiteren Vorteil, dass die Reibelemente am Belagträger und, falls vorhanden, am Trägerblech ohne Verlust ihrer Schwenkflexibilität gehalten sind.

Auch die Schwenkbewegung des Trägerbleches gegenüber dem Belagträger ist durch die oben beschriebene Festlegung der Reibelemente am Trägerblech nicht beeinträchtigt.

Die einzelnen Komponenten des erfindungsgemäßen Bremsbelags sind außerdem einfach und wirtschaftlich herstellbar.

Wenngleich die Festlegung eines ersten Bauteils an einem zweiten Bauteil durch plastische Verformung beispielsweise aus der EP 2 811 195 A1, der DE 10 2013 011 672 A1 oder der DE 200 17 539 U1 prinzipiell bekannt ist, so sind die sich in dieser Anwendung ergebenden oben genannten Vorteile aus den oben genannten Druckschriften nicht erkennbar.

Die erfindungsgemäßen Verfahren zeichnen sich durch die folgenden Verfahrensschritte aus:
a) Einführen des Halteelements des Reibelementes in die Aussparung des Belagträgers,
b) Aufsetzen des Federelementes auf das Kopfteil des Halteelements,
c) Vorspannen des Federelementes,
d) Verstemmen oder Vernieten des Federelementes mit dem Kopfteil des Halteelements.

Sofern die Reibelemente an Trägerblechen gehalten sind, erfolgt in Schritt a) das Einführen des Halteelements des Reibelementes durch eine Öffnung des Trägerbleches hindurch in die Aussparung des Belagträgers.

Bei Einsatz eines Sicherungselementes zeichnet sich das erfindungsgemäße Verfahren durch die folgenden Verfahrensschritte aus:
a) Einführen des Halteelements des Reibelementes in die Aussparung des Belagträgers,
b) Aufsetzen des Federelementes auf das Kopfteil des Halteelements,
c) Aufsetzen des Sicherungselementes auf das Kopfteil des Halteelements,
d) Vorspannen des Federelementes und
e) Verstemmen oder Vernieten des Sicherungselementes mit dem Kopfteil des Halteelements.

Sofern die Reibelemente an Trägerblechen gehalten sind, erfolgt in Schritt a) das Einführen des Halteelements des Reibelementes durch eine Öffnung des Trägerbleches hindurch in die Aussparung des Belagträgers.

Durch Einsatz des erfindungsgemäßen Verfahrens beim Montieren des Reibelements am Belagträger ist eine hohe Prozesssicherheit gewährleistet, so dass eine aufwändige Kontrolle bezüglich des Sitzes der Federelemente im Trägerblech im Belagträger entfällt. Außerdem ist mit diesem Verfahren eine einfache und wirtschaftliche Montage und Demontage der einzelnen Komponenten des erfindungsgemäßen Bremsbelags ermöglicht.

Vorteilhafte Ausführungsvarianten der Erfindung sind Gegenstand der Unteransprüche.

Gemäß einer vorteilhaften Ausführungsvariante der Erfindung ist das Federelement oder das das Federelement stützende Sicherungselement mit dem Kopfteil des Halteelements vernietet.

In einer alternativen Ausführungsvariante ist das Federelement oder das das Federelement stützende Sicherungselement mit dem Kopfteil des Halteelements verstemmt. Beide Befestigungsarten gewährleisten die oben genannten Vorteile und sind einfach und kostengünstig durchführbar.

Das Federelement ist bevorzugt als Tellerfeder, als Sternfeder oder als Profilfeder ausgebildet. Sämtliche der genannten Federarten gewährleisten eine stets annähernd gleiche umseitige Federbelastung auch bei Verkippen des Halteelements.

Zur weiteren Verbesserung der Auflage der Federelemente ist die Aussparung des Belagträgers als Profilbohrung ausgebildet, bevorzugt kalottenförmig oder konusförmig. Die kalottenförmige Formung der Aussparung des Belagträgers ist dabei bevorzugt an den Radius der Kugelkalotte des Reibelements angepasst ausgebildet.

Nachfolgend werden bevorzugte Ausführungsvarianten der Erfindung anhand der beiliegenden Zeichnungen näher erläutert. Es zeigen:
- Figur 1: eine perspektivische Ansicht einer Ausführungsvariante eines erfindungsgemäßen Bremsbelags, festgelegt an einem Belaghalter einer Teilbelag-Scheibenbremse eines Schienenfahrzeugs,
- Figur 2: eine Ansicht von unten auf ein Trägerblech des erfindungsgemäßen Bremsbelags,
- Figur 3: eine Seitenschnittansicht durch das in Figur 2 Trägerblech,
- Figuren 4, 6 und 7: jeweilige Schnittansichten durch den Belagträger und das Trägerblech mit darin angeordneten Halteelementen der Reibelemente zur Darstellung der Sicherung der Reibelemente im Belagträger,
- Figur 5: eine Schnittansicht durch den Belagträger mit Darstellung unterschiedlicher Varianten der Aussparung des Belagträgers zur Aufnahme des Kopfteils und des Federelements,
- Figur 8: eine Frontansicht auf eine Rohform des Halteelements vor der plastischen Verformung,
- Figuren 9a - c): unterschiedliche Ausführungsvarianten des Federelements,
- Figur 10: eine Ansicht von unten auf eine alternative Ausführungsvariante eines erfindungsgemäßen Bremsbelags,
- Figur 11: eine Seitenansicht auf den in Figur 10 gezeigten Bremsbelag und
- Figuren 12 und 13: jeweilige Schnittansichten durch den Belagträger mit darin angeordneten Halteelementen der Reibelemente zur Darstellung der Sicherung der Reibelemente im Belagträger.

In der nachfolgenden Figurenbeschreibung beziehen sich Begriffe wie oben, unten, links, rechts, vorne, hinten usw. ausschließlich auf die in den jeweiligen Figuren gewählte beispielhafte Darstellung und Position des Bremsbelags, des Belagträgers, der Trägerbleche, der Reibelemente, der Federelement, der Halteelemente und dergleichen. Diese Begriffe sind nicht einschränkend zu verstehen, d.h., durch verschiedene Arbeitsstellungen oder die spiegelsymmetrische Auslegung oder dergleichen können sich diese Bezüge ändern.

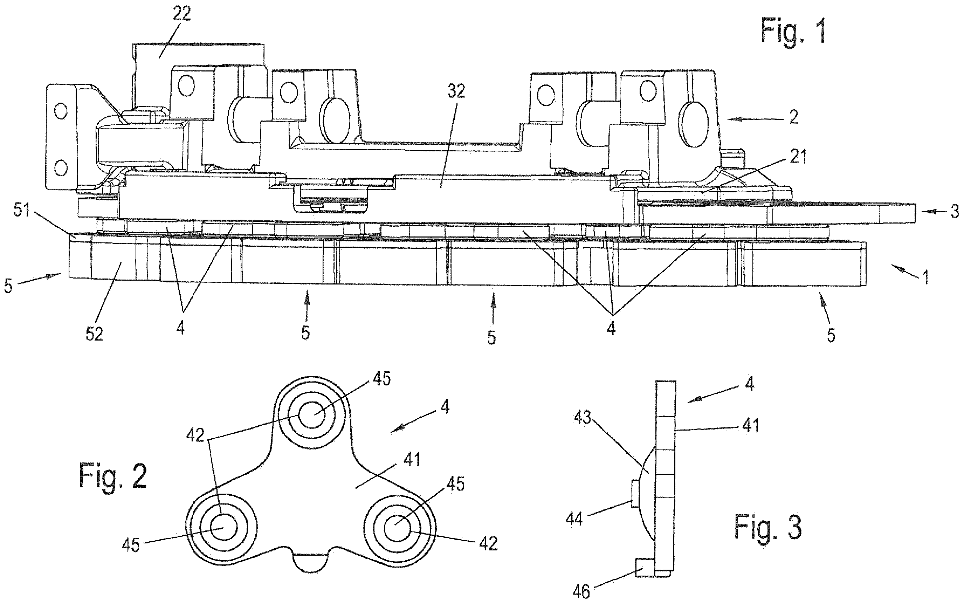

In Figur 1 ist mit dem Bezugszeichen 1 eine bevorzugte Ausführungsvariante eines erfindungsgemäßen Bremsbelags einer Teilbelag-Scheibenbremse eines Schienenfahrzeugs bezeichnet. Der Bremsbelag weist dabei einen Belagträger 3 auf, an dem mehrere Trägerbleche 4 schwenkbar angeordnet sind. An den Trägerblechen 4 ihrerseits sind jeweils mehrere Reibelemente 5 schwenkbar angeordnet.

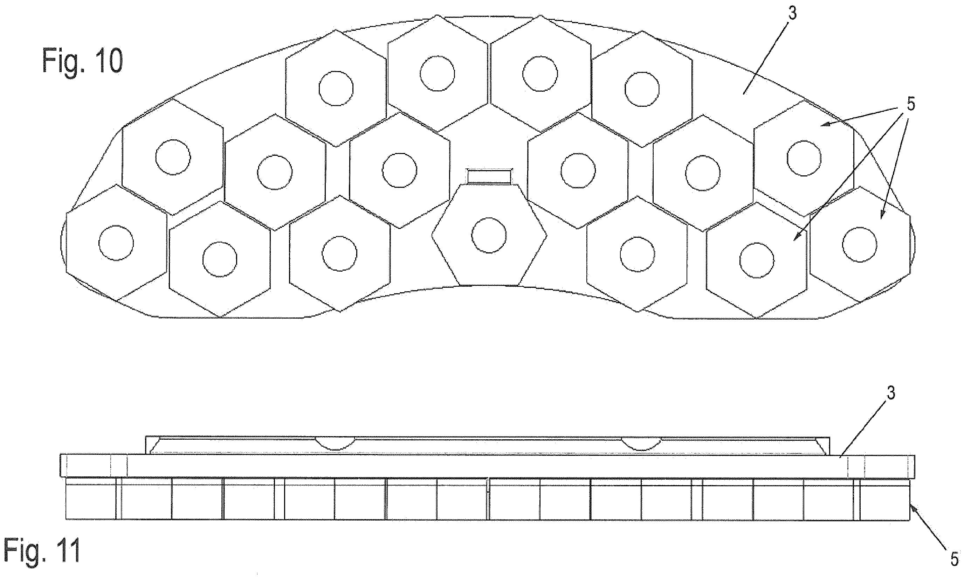

Denkbar ist ebenfalls, die Reibelemente 5 direkt an den Belagträger 3 anzubinden, wie es in den Figuren 10 bis 13 gezeigt ist. Dazu weisen die Reibelemente 5 ersten Kugelkalotten auf, die in Ausnehmungen 34 des Belagträgers 3 schwenkbar geführt sind.

Zur näheren Erläuterung wird die Erfindung im Folgenden zunächst anhand der Ausführungsvariante des Bremsbelags mit zwischen dem Belagträger 3 und den Reibelementen 5 angeordneten Trägerblechen 4 beschrieben.

Zur Befestigung des Bremsbelags 1 an der Teilbelag-Scheibenbremse des Schienenfahrzeugs ist ein Belaghalter 2 an der Teilbelag-Scheibenbremse vorgesehen, an dem der Bremsbelag 1 festlegbar ist.

Dazu wird der Belagträger 3 parallel zur Reibbelagfläche der Reibelemente 5 auf den Belaghalter 2 aufgeschoben. Am Belagträger 3 ist bzw. sind dazu einer oder mehrere Umgriffstege 32 vorgesehen, die im aufgeschobenen Zustand eine Anlageplatte 21 des Belagträgers 2 übergreifen.

Nach dem Aufschieben des Bremsbelags 1 auf den Belagträger 2 wird ein Bolzen 22 des Belagträgers 2 senkrecht zur Ebene des Belagträgers 3 in eine dazu vorgesehene Ausnehmung des Belagträgers 3 vorgeschoben und verspannt.

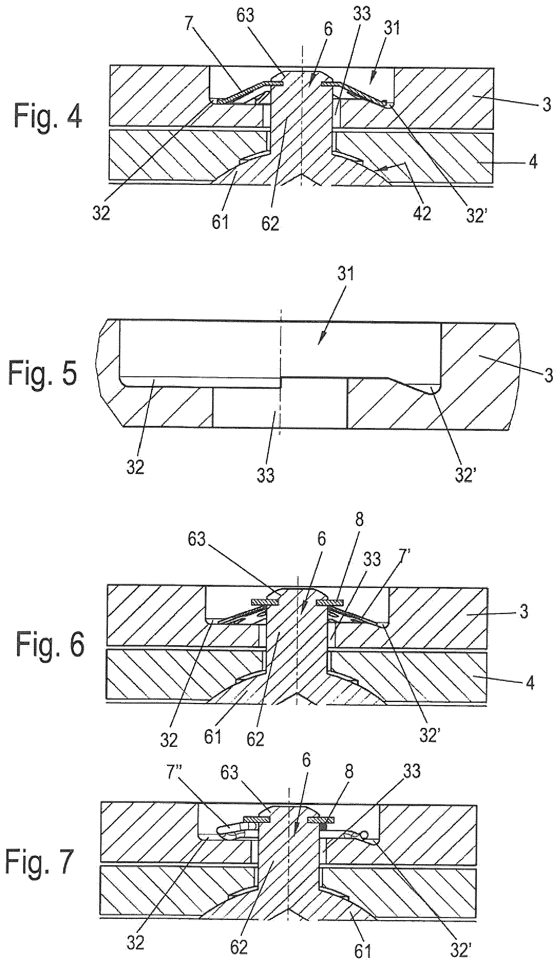

Die Figuren 2 und 3 zeigen unterschiedliche Ansichten eines Trägerblechs 4 des Bremsbelags 1. Jedes der Trägerbleche 4 weist mehrere kalottenförmige Pfannen 42 auf, in denen jeweils eine entsprechend geformte Kugelkalotte eines Reibelements 5 gelagert ist, wie es in den Figuren 4, 6 und 7 gezeigt ist.

Die Kugelkalotten der jeweiligen Reibelemente 5 sind hier als Teilstück eines Halteelements 6 ausgebildet, mit einem sich zentral von der Kugelkalotte 61 erhebenden Halsteil 62 und einem Kopfteil 63. Die kalottenförmigen Pfannen 42 sind dementsprechend auf einer den Reibbelägen 5 zugewandten Unterseite 41 des Trägerblechs 4 angeformt.

Auf der der Unterseite 41 abgewandten Oberseite des Trägerblechs 4 ist bevorzugt zentral eine zweite Kugelkalotte 43 am Trägerblech 4, bevorzugt mit einem zentralen Nocken 44, angeformt, die in einer entsprechend geformten kalottenförmigen Pfanne auf einer Unterseite des Belagträgers 3 schwenkbar gelagert ist.

Zur Verhinderung einer Rotation des Trägerblechs 4 um eine zum Stiftteil 62 des Halteelements 6 parallelen Achse zu verhindern, ist an dem Trägerblech 4 bevorzugt ein Nocken 46 angeformt, der in eine Bohrung im Belagträger 3 eingreift.

Wie in den Figuren 4, 6 und 7 gezeigt ist, durchsetzen die Halteelemente 6 der Reibelemente 5 sowohl das Trägerblech 4 als auch den Belagträger 3. Das Kopfteil 63 des Halteelements 6 ist dabei in einer Aussparung 31 des Belagträgers 3 auf der dem Belaghalter 2 zugewandten Oberseite des Belagträgers 3 aufgenommen.

Entsprechend wird bei der oben angesprochen weiteren Ausführungsvariante des Bremsbelags ohne Trägerbleche 4 das Halteelement 6 des Reibelementes 5 direkt in die Aussparung 31 des Belagträgers 3 eingeführt.

Auf das Kopfteil 63 des Halteelements 6 ist ein Federelement 7 aufgesetzt, das sich einerseits am Kopfteil 63 des Halteelements 6 und andererseits in der Aussparung 31 des Belagträgers 3 abstützt. Dadurch ist jedes der Reibelemente 5 mittels des Federelements 7, 7', 7" gegenüber dem Belagträger 3 verspannt.

Das Federelement 7, 7', 7" ist gemäß der in Figur 4 gezeigten besonderen Ausführungsvariante an einem in der Aussparung 31 des Belagträgers 3 aufgenommenen Kopfteil 63 des Halteelements 6 durch plastische Verformung des Kopfteils 63 kraft- und formschlüssig festgelegt.

Bei der in Figuren 6 und 7 gezeigten Ausführungsvariante ist ein Sicherungselement 8 an dem Kopfteil 63 des Halteelements 6 durch plastische Verformung des Kopfteils 63 kraft- und formschlüssig festgelegt, wobei das Federelement 7, 7', 7" sich an einer dem Trägerblech 4 zugewandten Unterseite des Sicherungselements 8 abstützt.

Das Sicherungselement 8 ist dabei bevorzugt als Ringscheibe ausgebildet. Denkbar ist aber auch, das Sicherungselement 8 in Gestalt mehrerer Stege oder Teilringstücken auszubilden, die durch die plastische Verformung des Kopfteils 63 kraft- und formschlüssig am Halteelement 6 festgelegt sind.

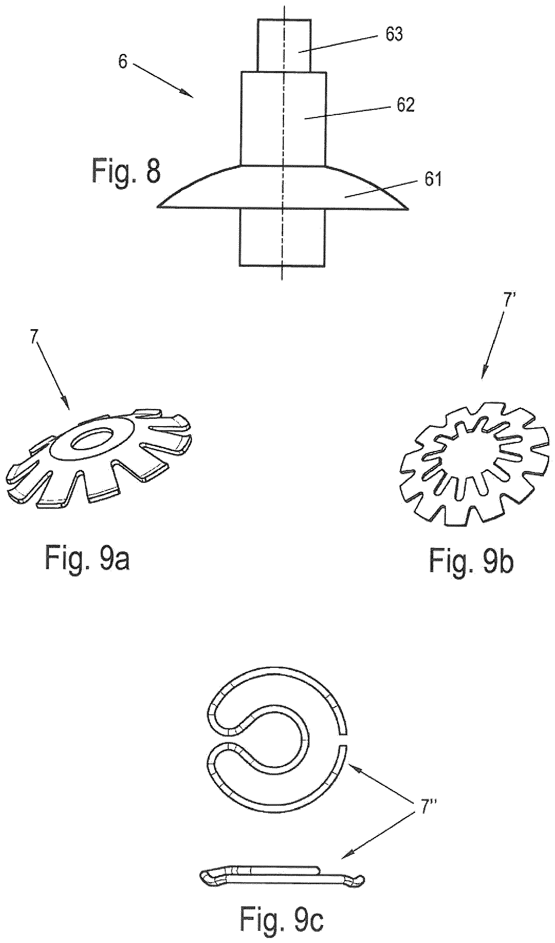

Die Federelemente 7, 7', 7" sind bevorzugt als Tellerfeder, insbesondere geschlitzte Tellerfeder, wie in Figur 9a gezeigt, als Sternfeder, wie in Figur 9b gezeigt oder auch als Profilfeder, wie in Figur 9c gezeigt, ausgebildet. Denkbar sind aber auch andere Federformen.

Bei den in den Figuren 4, 6 und 7 gezeigten Ausführungsvarianten ist dementsprechend in Figur 4 eine Tellerfeder 7 gezeigt, in Figur 6 ist eine Sternfeder gezeigt und in Figur 7 ist eine Profilfeder 7" gezeigt.

Die kraft- und formschlüssige Verbindung zwischen dem Kopfteil des Halteelements 6 und dem Federelement 7, 7', 7" bzw. dem Sicherungselement 8 ist besonders bevorzugt als Vernietung oder Verstemmung ausgebildet.

Ein Halteelement 6 vor der plastischen Verformung ist in Figur 8 gezeigt. Das Halteelement 6 weist dabei, wie weiter oben bereits erwähnt, eine Kugelkalotte 61 auf, deren unterer Rand im am Reibelement 5 befestigten Zustand auf einer einen jeweiligen Reibbelag 52 haltenden Reibelementplatte 51 des Reibelements 5 aufliegt. Das Stegteil 62 des Halteelements 6 erstreckt sich dabei unterhalb der Kugelkalotte 61 in das Reibelement 5.

Nach der Montage des Reibelements 5 am Belaghalter 3 und Belagträger 4 erstreckt sich das Stegteil 62 oberhalb der Kugelkalotte 61 durch eine zentrale Öffnung der kalottenförmigen Pfanne 42 des Trägerblechs 4 hindurch durch eine Öffnung 33 im Belagträger 3. Der Durchmesser der Öffnung 33 im Belagträger 3 ist dabei größer als der Durchmesser des Stegteils 62 des Halteelements 6, um eine Schwenkbewegung des Halteelements 6 zu ermöglichen.

Wie insbesondere in Figur 5 gut zu erkennen ist, ist die Aussparung 31 des Belagträgers 3 bevorzugt als Senkbohrung ausgebildet. Dies ist in der linken Hälfte der in Figur 5 gezeigten Schnittansicht durch den Belagträger 3 dargestellt. Die rechte Hälfte der Schnittansicht durch den Belagträger 3 zeigt eine Ausbildung der Aussparung 31 des Belagträgers 3 als Profilbohrung.

Während der Boden 32 der als Senkbohrung ausgebildeten Aussparung 31 eben ausgebildet ist, ist der Boden 32' der als Profilbohrung ausgebildeten Aussparung 31 radial nach außen sich vertiefend ausgebildet. Besonders bevorzugt ist die Aussparung 31 des Belagträgers 3 kalottenförmig ausgebildet.

Alternativ ist auch eine konusförmige Ausbildung der Aussparung 31 des Belagträgers 3 denkbar.

Die Geometrie einer solchen Profilbohrung ermöglicht dabei, dass das Federelement auch bei Verkippen des Halteelements 6 stets eine annähernd gleiche umseitige Federbelastung erfährt und dadurch eine gleichbleibende Kraft aufbringt.

Die kalottenförmige Ausbildung der Aussparung 31 ist dabei besonders bevorzugt dergestalt, dass sie der Kugelsegmentgeometrie der Kugelkalotte des Reibelements 5 entspricht.

Wichtig ist, dass durch die Festlegung des Federelements 7, 7', 7" oder des Sicherungselements 8 durch die plastische Verformung des Kopfteils 63 des Halteelements 6 die Reibelemente 5 in der Aussparung 31 des Belagträgers 3 zuverlässig gegen ein Herausfallen gesichert sind.

Diese Festlegung wirkt insbesondere auch dann, wenn das Federelement 7, 7', 7" brechen sollte, da zumindest ein Teilstück des Federelements 7, 7', 7" oder das Sicherungselement 8 stets am Kopfteils 63 des Halteelements 6 gehalten ist und somit ein Durchrutschen durch die Öffnung 33 im Belagträger 3 nicht möglich ist.

Zur Montage des Reibelements 5 am Belagträger 3 des Bremsbelags 1 wird zunächst das am Reibelement 5 bereits festgelegte Halteelement 6 durch die Öffnung 45 des Trägerblechs 4 hin und die Öffnung 33 des Belagträgers 3 hindurch in die Aussparung 31 des Belagträgers 3 eingeführt.

Anschließend wird für die in Figur 4 gezeigte Ausführungsvariante das Federelement 7, 7', 7" auf das Kopfteil 63 des Halteelements 6 aufgesetzt. Danach wird das Federelement 7, 7', 7" mithilfe eines Niederhalters vorgespannt.

Schließlich wird das Federelement 7, 7', 7" mit dem Kopfteil 63 des Halteelements 6 verstemmt oder vernietet.

Bei den in den Figuren 6 und 7 gezeigten Ausführungsvarianten wird anstelle des Federelements 7, 7', 7" das Sicherungselement 8 mit dem Kopfteil 63 des Halteelements 6 verstemmt oder vernietet. Davor wird nach dem Aufsetzen des Federelements 7, 7', 7" auf das Kopfteil 63 des Halteelements 6 entsprechend das Sicherungselement 8 noch auf das Kopfteil 63 des Halteelements 6 aufgesetzt.

Bei der Ausführungsvariante des Bremsbelages 1, wie er in den Figuren 10 bis 13 dargestellt ist, sind die Reibelemente 5 direkt an den Belagträger 3 angebunden.

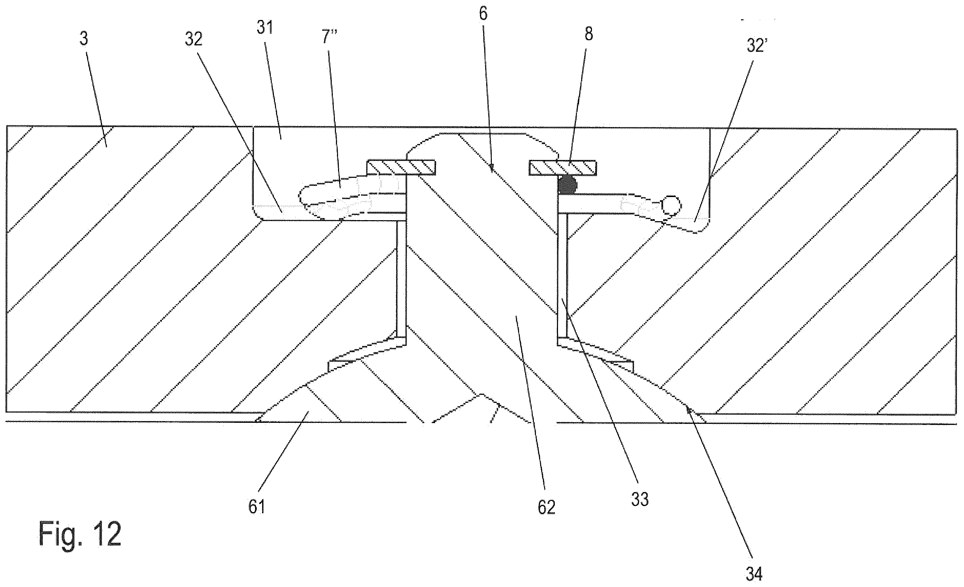

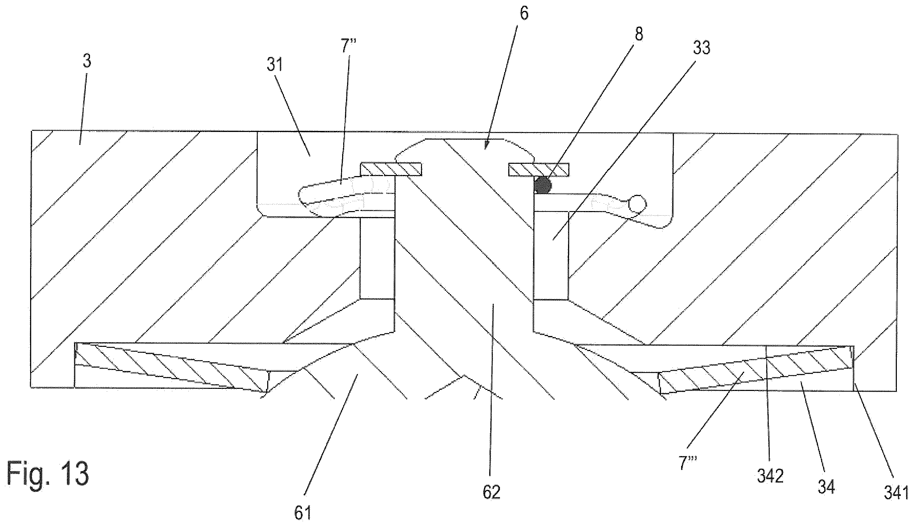

Auch bei dieser Ausführungsvariante des Bremsbelages 1 sind in der dem Belaghalter 2 zugewandten Oberseite des Belagträgers 3 Aussparung 31 vorgesehen, in den die Kopfteile 63 der Halteelemente 6 aufgenommen sind, wie es in den Figuren 12 und 13 gezeigt ist.

Die Halteelemente 6 der Reibelemente 5 durchsetzen dabei den Belagträger 3. Die den Reibelementen 5 zugewandte Unterseite des Belagträgers 3 weist Ausnehmungen 34 auf, die die Kugelkalotten 61 der Reibelemente 5 aufnehmen.

Während bei der in Figur 12 gezeigten Ausführungsvariante die Ausnehmungen 34 als kalottenförmige Pfannen ausgebildet sind, sind die Ausnehmungen 34 bei der in Figur 13 gezeigten Ausführungsvariante im Querschnitt rechteckig ausgebildet, wobei in den Ausnehmungen 34 jeweilige bevorzugt als Tellerfedern ausgebildete Federelemente 7'" einliegen, die sich mit ihrem Außenrand an einem Seiteninnenrand 341 und einem Boden 342 der Ausnehmungen 34 und sich andererseits auf der dem Reibbelag des Reibelementes 5 abgewandten Außenfläche der Kugelkalotten 61 der Reibelemente 5 abstützen.

Die kraft- und formschlüssige Verbindung zwischen dem Kopfteil des Halteelements 6 und dem Federelement 7" bzw. dem Sicherungselement 8 ist auch hier entsprechend der in Figur 7 gezeigten Ausführungsvariante bevorzugt als Vernietung oder Verstemmung ausgebildet. Denkbar sind selbstverständlich auch die kraft- und formschlüssigen Verbindungen, wie sie anhand der Figuren 4 bis 6 gezeigt und beschrieben sind.

### Bezugszeichenliste

- 1: Bremsbelag
- 2: Belaghalter
- 21: Anlageplatte
- 22: Bolzen

- 3: Belagträger
- 31: Aussparung
- 32: Umgriffsteg
- 32': Boden
- 33: Öffnung
- 34: Ausnehmung
- 341: Seiteninnenrand
- 342: Boden

- 4: Trägerblech
- 41: Unterseite
- 42: Pfanne
- 43: Kugelkalotte
- 44: Nocken
- 45: Öffnung
- 46: Nocken

- 5: Reibelement
- 51: Reibelementplatte
- 52: Reibbelag

- 6: Halteelement
- 61: Kugelkalotte
- 62: Halsteil
- 63: Kopfteil

- 7: Federelement
- 7': Federelement
- 7": Federelement
- 7'": Federelement

- 8: Sicherungselement

## Patentansprüche

1. Bremsbelag (1) für eine Teilbelag-Scheibenbremse eines Schienenfahrzeuges, aufweisend
- einen Belagträger (3),
- mehrere Reibelemente (5), die relativ zu dem Belagträger (3) schwenkbar angeordnet sind,
- wobei jedes der Reibelemente (5) ein den Belagträger (3) durchsetzendes Halteelement (6) aufweist, an dem ein Federelement (7, 7') abgestützt ist,
- wobei jedes der Reibelemente (5) mittels des Federelements (7, 7') gegenüber dem Belagträger (3) verspannt ist,
**dadurch gekennzeichnet, dass**
- das Federelement (7, 7') oder ein das Federelement (7, 7') stützendes Sicherungselement (8) an einem in einer Aussparung (31) des Belagträgers (3) aufgenommenen Kopfteil (63) des Halteelements (6) durch plastische Verformung des Kopfteils (63) kraft- und formschlüssig festgelegt ist.

2. Bremsbelag nach Anspruch 1, **dadurch gekennzeichnet, dass** die Reibelemente (5) direkt an dem Belagträger (3) angeordnet sind, wobei die Halteelemente (6) erste Kugelkalotten (61) aufweisen, die in Ausnehmungen (34) an der den Reibelementen (5) zugewandten Unterseite des Belagträgers (3) schwenkbar geführt sind.

3. Bremsbelag nach Anspruch 1, **dadurch gekennzeichnet, dass** an dem Belagträger (3) mehrere Trägerbleche (4) schwenkbar angeordnet sind, wobei die Reibelemente (5) schwenkbar an den Trägerblechen (4) angeordnet sind, wobei die Halteelemente (6) mittels erster Kugelkalotten (61) in kalottenförmigen Pfannen (42) des jeweiligen Trägerblechs (4) und die Trägerbleche (4) mittels zweiter Kugelkalotten (43) in kalottenförmigen Pfannen des Belagträgers (3) schwenkbar geführt sind, wobei die Halteelemente (6) der Reibelemente (5) das Trägerblech (4) und den Belagträger (3) durchsetzen.

4. Bremsbelag nach einem der vorstehenden Ansprüche, **dadurch gekennzeichnet, dass** das Federelement (7, 7') oder das das Federelement (7, 7') stützende Sicherungselement (8) mit dem Kopfteil (63) des Halteelements (6) vernietet ist.

5. Bremsbelag nach einem der Ansprüche 1 bis 3, **dadurch gekennzeichnet, dass** das Federelement (7, 7') oder das das Federelement (7, 7') stützende Sicherungselement (8) mit dem Kopfteil (63) des Halteelements (6) verstemmt ist.

6. Bremsbelag nach einem der vorstehenden Ansprüche, **dadurch gekennzeichnet, dass** das Federelement (7, 7') als Tellerfeder, Sternfeder oder Profilfeder ausgebildet ist.

7. Bremsbelag nach einem der vorstehenden Ansprüche, **dadurch gekennzeichnet, dass** die Aussparung (31) des Belagträgers (3) als Senkbohrung ausgebildet ist.

8. Bremsbelag nach einem der vorstehenden Ansprüche 1 bis 6, **dadurch gekennzeichnet, dass** die Aussparung (31) des Belagträgers (3) als Profilbohrung ausgebildet ist.

9. Bremsbelag nach Anspruch 8, **dadurch gekennzeichnet, dass** die Aussparung (31) des Belagträgers (3) kalottenförmig ausgebildet ist.

10. Bremsbelag nach Anspruch 8, **dadurch gekennzeichnet, dass** die Aussparung (31) des Belagträgers (3) konusförmig ausgebildet ist.

11. Anordnung eines Bremsbelags (1) einer Teilbelag-Scheibenbremse eines Schienenfahrzeuges an einem Belaghalter (2), **dadurch gekennzeichnet, dass** der Bremsbelag (1) gemäß einem der vorhergehenden Ansprüche ausgebildet ist.

12. Verfahren zum Montieren eines Reibelementes (5) an einem Belagträger (3) eines Bremsbelags gemäß einem der vorstehenden Ansprüche 2 und 4 bis 10, mit den Verfahrensschritten:
a. Einführen des Halteelements (6) des Reibelementes (5) in die Aussparung (31) des Belagträgers (3),
b. Aufsetzen des Federelements (7, 7') auf das Kopfteil (63) des Halteelements (6),
c. Vorspannen des Federelements (7, 7'),
d. Verstemmen oder Vernieten des Federelements (7, 7') mit dem Kopfteil (63) des Halteelements (6).

13. Verfahren zum Montieren eines Reibelementes (5) an einem Belagträger (3) eines Bremsbelags gemäß einem der vorstehenden Ansprüche 3 bis 10, mit den Verfahrensschritten:
a. Einführen des Halteelements (6) des Reibelementes (5) durch eine Öffnung (45) des Trägerbleches (4) hindurch in die Aussparung (31) des Belagträgers (3),
b. Aufsetzen des Federelements (7, 7') auf das Kopfteil (63) des Halteelements (6),
c. Vorspannen des Federelements (7, 7'),
d. Verstemmen oder Vernieten des Federelements (7, 7') mit dem Kopfteil (63) des Halteelements (6).

14. Verfahren zum Montieren eines Reibelementes (5) an einem Belagträger (3) eines Bremsbelags gemäß einem der vorstehenden Ansprüche 2 und 4 bis 10, mit den Verfahrensschritten:
a. Einführen des Halteelements (6) des Reibelementes (5) in die Aussparung (31) des Belagträgers (3),
b. Aufsetzen des Federelements (7, 7') auf das Kopfteil (63) des Halteelements (6),
c. Aufsetzen des Sicherungselement (8) auf das Kopfteil (63) des Halteelements (6),
d. Vorspannen des Federelements (7, 7'),
e. Verstemmen oder Vernieten des Sicherungselement (8) mit dem Kopfteil (63) des Halteelements (6).

15. Verfahren zum Montieren eines Reibelementes (5) an einem Belagträger (3) eines Bremsbelags gemäß einem der vorstehenden Ansprüche 3 bis 10, mit den Verfahrensschritten:
a. Einführen des Halteelements (6) des Reibelementes (5) durch eine Öffnung (45) des Trägerbleches (4) hindurch in die Aussparung (31) des Belagträgers (3),
b. Aufsetzen des Federelements (7, 7') auf das Kopfteil (63) des Halteelements (6),
c. Aufsetzen des Sicherungselement (8) auf das Kopfteil (63) des Halteelements (6),
d. Vorspannen des Federelements (7, 7'),
e. Verstemmen oder Vernieten des Sicherungselement (8) mit dem Kopfteil (63) des Halteelements (6).

## Claims

1. Brake pad (1) for a partially lined disc brake of a rail vehicle, comprising:
- a pad support (3),
- a plurality of friction elements (5), which are arranged pivotably relative to the pad support (3),
- such that each of the friction elements (5) comprises a holding element (6) that passes through the pad support (3), against which holding element a spring element (7, 7') is supported,
- so that each of the friction elements (5) is braced against the pad support (3) by means of the spring element (7, 7'),
**characterised in that**
- the spring element (7, 7') or a securing element (8) that supports the spring element (7, 7') is fixed to a head portion (63) of the holding element (6), which is held by friction and interlock in a recess (31) of the pad support (3) by plastic deformation of the said head portion (63).

2. Brake pad according to Claim 1, **characterised in that** the friction elements (5) are arranged directly on the pad support (3), and the holding elements (6) comprise first spherical cups (61) which are guided pivotably in recesses (34) formed on the underside of the pad support (3) that faces toward the friction elements (5).

3. Brake pad according to Claim 1, **characterised in that** a plurality of backing plates (4) are arranged pivotably on the pad support (3), and the friction elements (5) are arranged pivotably on the backing plates (4), in such manner that by means of first spherical cups (61) in cup-shaped depressions (42) of the respective backing plate (4) the holding elements (6), and by means of second spherical cups (43) in cup-shaped depressions of the pad support (3) the backing plates (4), are pivotably guided, and the holding elements (6) of the friction elements (5) extend through the backing plate (4) and the pad support (3).

4. Brake pad according to any of the preceding claims, **characterised in that** the spring element (7, 7') or the securing element (8) that supports the spring element (7, 7') is riveted to the head portion (63) of the holding element (3).

5. Brake pad according to any of Claims 1 to 3, **characterised in that** the spring element (7, 7') or the securing element (8) that supports the spring element (7, 7') is caulked to the head portion (63) of the holding element (3).

6. Brake pad according to any of the preceding claims, **characterised in that** the spring element (7, 7') is in the form of a cup spring, a star spring or a profile spring.

7. Brake pad according to any of the preceding claims, **characterised in that** the recess (31) of the pad support (3) is in the form of a countersunk bore.

8. Brake pad according to any of Claims 1 to 6, **characterised in that** the recess (31) of the pad support (3) is in the form of a profiled bore.

9. Brake pad according to Claim 8, **characterised in that** the recess (31) of the pad support (3) is cup-shaped.

10. Brake pad according to Claim 8, **characterised in that** the recess (31) of the pad support (3) is conical.

11. Arrangement of a brake pad (1) of a partially lined disc brake of a rail vehicle on a pad holder (2), **characterised in that** the brake pad (1) is formed according to any of the preceding claims.

12. Method for fitting a friction element (5) onto a pad support (3) of a brake pad according to any of the preceding Claims 2 and 4 to 10, having the process steps:
a. insertion of the holding element (6) of the friction element (5) into the recess (31) of the pad support (3),
b. positioning of the spring element (7, 7') on the head portion (63) of the holding element (6),
c. prestressing the spring element (7, 7'),
d. caulking or riveting the spring element (7, 7') onto the head portion (63) of the holding element (6).

13. Method for fitting a friction element (5) onto a pad support (3) of a brake pad according to any of the preceding Claims 3 to 10, having the process steps:
a. insertion of the holding element (6) of the friction element (5) through an opening (45) of the backing plate (4) into the recess (31) of the pad support (3),
b. positioning of the spring element (7, 7') on the head portion (63) of the holding element (6),
c. prestressing the spring element (7, 7'),
d. caulking or riveting the spring element (7, 7') onto the head portion (63) of the holding element (6).

14. Method for fitting a friction element (5) onto a pad support (3) of a brake pad according to any of the preceding Claims 2 and 4 to 10, having the process steps:
a. insertion of the holding element (6) of the friction element (5) into the recess (31) of the pad support (3),
b. positioning of the spring element (7, 7') on the head portion (63) of the holding element (6),
c. positioning of the securing element (8) on the head portion (63) of the holding element (6),
d. prestressing the spring element (7, 7'),
e. caulking or riveting the securing element (8) onto the head portion (63) of the holding element (6).

15. Method for fitting a friction element (5) onto a pad support (3) of a brake pad according to any of the preceding Claims 3 to 10, having the process steps:
a. insertion of the holding element (6) of the friction element (5) through an opening (45) of the backing plate (4) into the recess (31) of the pad support (3),
b. positioning of the spring element (7, 7') on the head portion (63) of the holding element (6),
c. positioning of the securing element (8) on the head portion (63) of the holding element (6),
d. prestressing the spring element (7, 7'),
e. caulking or riveting the securing element (8) onto the head portion (63) of the holding element (6).

## Revendications

1. Garniture (1) de frein pour un frein à disque à garniture partielle d'un véhicule ferroviaire, comportant
- un support (3) de garniture,
- plusieurs éléments (5) de friction, qui sont montés pivotants par rapport au support (3) de garniture,
- dans laquelle chacun des éléments (5) de friction a un élément (6) de maintien, qui traverse le support (3) de garniture et sur lequel s'appuie un élément (7, 7') de ressort,
- chacun des éléments (5) de friction étant bloqué par rapport au support (1) de garniture au moyen de l'élément (7, 7') de ressort,
**caractérisée en ce que**
- l'élément (7, 7') de ressort ou un élément (8) de fixation appuyant l'élément (7, 7') de ressort est fixé à une partie (63) de tête, reçue dans un évidement (31) du support (3) de garniture, de l'élément (6) de maintien, à coopération de force et complémentarité de forme, par déformation plastique de la partie (63) de tête.

2. Garniture de frein suivant la revendication 1, **caractérisée en ce que** les éléments (5) de friction sont montés directement sur le support (3) de garniture, les éléments (6) de maintien ayant des premières calottes (61) sphériques, qui sont guidées à pivotement dans des évidements (34) sur le côté inférieur, tourné vers les éléments (5) de friction, du support (3) de garniture.

3. Garniture de frein suivant la revendication 1, **caractérisée en ce que** plusieurs tôles (4) de support sont montées pivotantes sur le support (3) de garniture, les éléments (5) de friction sont montés pivotants sur les tôles (4) de support, les éléments (6) de maintien étant guidés à pivotement au moyen des premières calottes (61) sphériques dans des poches (42) en forme de calotte de la tôle (4) de support respective et les tôles (4) de support sont guidées à pivotement au moyen de deuxièmes calottes (43) sphériques dans des poches en forme de calotte du support (3) de garniture, les éléments (6) de maintien des éléments (5) de friction traversant la tôle (4) de support et le support (3) de garniture.

4. Garniture de frein suivant l'une des revendications précédentes, **caractérisée en ce que** l'élément (7, 7') de ressort ou l'élément (8) de fixation appuyant l'élément (7, 7') de ressort est riveté à la partie (63) de tête de l'élément (6) de maintien.

5. Garniture de frein suivant l'une des revendications 1 à 3, **caractérisée en ce que** l'élément (7, 7') de ressort ou l'élément (8) de fixation appuyant l'élément (7, 7') de ressort est maté avec la partie (63) de tête de l'élément (6) de maintien.

6. Garniture de frein suivant l'une des revendications précédentes, **caractérisée en ce que** l'élément (7, 7') de ressort est constitué sous la forme d'un ressort à disque, d'un ressort en étoile ou d'un ressort profilé.

7. Garniture de frein suivant l'une des revendications précédentes, **caractérisée en ce que** l'évidement (31) du support (3) de garniture est constitué sous la forme d'un trou foré.

8. Garniture de frein suivant l'une des revendications 1 à 6 précédentes, **caractérisée en ce que** l'évidement (31) du support (3) de garniture est constitué sous la forme d'un trou profilé.

9. Garniture de frein suivant la revendication 8, **caractérisée en ce que** l'évidement (31) du support (3) de garniture est constitué en forme de calotte.

10. Garniture de frein suivant la revendication 8, **caractérisée en ce que** l'évidement (31) du support (3) de garniture est constitué en forme de cône.

11. Agencement d'une garniture (1) de frein d'un frein à disque à garniture partielle d'un véhicule ferroviaire sur un porte-garniture (2), **caractérisé en ce que** la garniture (1) de frein est constituée suivant l'une des revendications précédentes.

12. Procédé de montage d'un élément (5) de friction sur un support (3) de garniture d'une garniture de frein suivant l'une des revendications 2 et 4 à 10 précédentes, comprenant les stades de procédé :
a. introduction de l'élément (6) de maintien de l'élément (5) de friction dans l'évidement (31) du support (3) de garniture,
b. mise de l'élément (7, 7') de ressort sur la partie (63) de tête de l'élément (6) de maintien,
c. précontrainte de l'élément (7, 7') de ressort,
d. matage ou rivetage de l'élément (7, 7') de ressort avec la partie (63) de tête de l'élément (6) de maintien.

13. Procédé de montage d'un élément (5) de friction sur un support (3) de garniture d'une garniture de frein suivant l'une des revendications 3 à 10 précédentes, comprenant les stades de procédé :
a. Introduction de l'élément (6) de maintien de l'élément (5) de friction par une ouverture (45) de la tôle (4) de support dans l'évidement (31) du support (3) de garniture,
b. mise de l'élément (7, 7') de ressort sur la partie (63) de tête de l'élément (6) de maintien,
c. précontrainte de l'élément (7, 7') de ressort,
d. matage ou rivetage de l'élément (7, 7') de ressort avec la partie (63) de tête de l'élément (6) de maintien.

14. Procédé de montage d'un élément (5) de friction sur un support (3) de garniture d'une garniture de frein suivant l'une des revendications 2 et 4 à 10 précédentes, comprenant les stades de procédé :
a. introduction de l'élément (6) de maintien de l'élément (5) de friction dans l'évidement (31) du support (3) de garniture,
b. mise de l'élément (7, 7') de ressort sur la partie (63) de tête de l'élément (6) de maintien,
c. mise de l'élément (8) de fixation sur la partie (63) de tête de l'élément (6) de maintien,
d. précontrainte de l'élément (7, 7') de ressort,
e. matage ou rivetage de l'élément (8) de fixation avec la partie (63) de tête de l'élément (6) de maintien.

15. Procédé de montage d'un élément (5) de friction sur un support (3) de garniture d'une garniture de frein suivant l'une des revendications 3 à 10 précédentes, comprenant les stades de procédé :
a. Introduction de l'élément (6) de maintien de l'élément (5) de friction par une ouverture (45) de la tôle (4) de support dans l'évidement (31) du support (3) de garniture,
b. mise de l'élément (7, 7') de ressort sur la partie (63) de tête de l'élément (6) de maintien,
c. mise de l'élément (8) de fixation sur la partie (63) de tête de l'élément (6) de maintien,
d. précontrainte de l'élément (7, 7') de ressort,
e. matage ou rivetage de l'élément (8) de fixation avec la partie (63) de tête de l'élément (6) de maintien.
